Europäisches Patentamt

European Patent Office

Office européen des brevets

(19)

(11) **EP 0 746 537 B1**

(12) **EUROPÄISCHE PATENTSCHRIFT**

(45) Veröffentlichungstag und Bekanntmachung des Hinweises auf die Patenterteilung:
**02.08.2000 Patentblatt 2000/31**

(51) Int. Cl.⁷: **C05G 3/08**

(21) Anmeldenummer: **95911198.0**

(22) Anmeldetag: **20.02.1995**

(86) Internationale Anmeldenummer:
**PCT/DE95/00248**

(87) Internationale Veröffentlichungsnummer:
**WO 95/22515 (24.08.1995 Gazette 1995/36)**

(54) **WIRKSTOFFKOMBINATIONEN ZUR HEMMUNG BZW. REGELUNG DER NITRIFIKATION**

COMBINATION OF ACTIVE SUBSTANCES FOR INHIBITING OR REGULATING NITRIFICATION

COMBINAISONS DE PRINCIPES ACTIFS UTILISES POUR INHIBER OU REGULER LA NITRIFICATION

(84) Benannte Vertragsstaaten:
**AT BE CH DK ES FR GB GR IE IT LI NL PT SE**

(30) Priorität: **21.02.1994 DE 4405392**

(43) Veröffentlichungstag der Anmeldung:
**11.12.1996 Patentblatt 1996/50**

(73) Patentinhaber:
**SKW STICKSTOFFWERKE PIESTERITZ GmbH
06886 Lutherstadt Wittenberg (DE)**

(72) Erfinder:
• **GRABARSE, Margrit
D-04687 Seelingstädt (DE)**
• **LANG, Sieghard
D-04451 Cunnersdorf (DE)**
• **MICHEL, Hans-Jürgen
D-04827 Machern (DE)**
• **WOZNIAK, Hartmut
D-04451 Cunnersdorf (DE)**

(74) Vertreter: **HOFFMANN - EITLE
Patent- und Rechtsanwälte
Arabellastrasse 4
81925 München (DE)**

(56) Entgegenhaltungen:
**US-A- 3 701 645**

• **DATABASE WPI Section Ch, Week 8534 Derwent Publications Ltd., London, GB; Class C04, AN 85-208634 & SU,A,1 137 096 ( VODOPYANOV V G) , 30.Januar 1985 in der Anmeldung erwähnt**
• **DATABASE WPI Section Ch, Week 8605 Derwent Publications Ltd., London, GB; Class C03, AN 86-029244 & DD,A,227 957 ( VEB AGROCH PIESTERI) , 2.Oktober 1985 in der Anmeldung erwähnt**
• **CHEMICAL ABSTRACTS, vol. 112, no. 15, 9.April 1990 Columbus, Ohio, US; abstract no. 138171u, BREMNER, J.M. ET AL 'Effects of nitrification inhibitors on germination of various seeds in soil' Seite 642; & BIOL. FERTIL. SOILS , Bd. 8,Nr. 4, 1989 Seiten 369-72,**

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft die Verwendung von Kombinationen, bestehend aus zwei oder mehr Wirkstoffen, zur Hemmung bzw. Regelung der Nitrifikation von Ammoniumstickstoff in Kulturböden und Substraten.

Reduzierter Stickstoff wie Ammonium- oder Amidstickstoff unterliegt im Boden in relativ kurzer Zeit der mikrobiellen Umwandlung über die Zwischenstufe Nitritstickstoff zu Nitratstickstoff Dieser Nitrifikationsprozeß wird maßgeblich von der Temperatur, der Bodenfeuchtigkeit, dem pH-Wert und der mikrobiellen Aktivität des Bodens beeinflußt. Von Nachteil ist in diesem Zusammenhang, daß im Gegensatz zum Ammoniumstickstoff der Nitratstickstoff nicht durch Sorptionsträger des Bodens sorbiert wird und demzufolge durch Niederschläge mit dem Oberflächenwasser ausgetragen oder aber in tiefere, nicht mehr der Pflanze zugängliche Bodenschichten bis hin ins Grundwasser verlagert wird. Diese Auswaschungsverluste können bei ungünstigen Witterungs- und Bodenverhältnissen Dimensionen von über 20 % des im Boden verfügbaren reduzierten Stickstoffs annehmen. Hinzu kommen noch Denitrifikationsverluste, die unter anaeroben Bedingungen durch eine Reduktion des durch Nitrifikation gebildeten Nitratstickstoffs zu gasförmigen Verbindungen dieser proportional verlaufen und unter ungünstigen Bedingungen auch ähnliche Größenordnungen erreichen können.

Durch eine Hemmung bzw. Regelung der Nitrifikation vermittels geeigneter chemischer Substanzen kann die Ausnutzung des Düngemittelstickstoffs durch die Pflanze erheblich verbessert werden. Andererseits bietet eine derartige Lösung den zusätzlichen Vorteil, daß es dadurch zu einer Reduzierung der Nitratbelastung des Grund- und Oberflächenwassers kommt, aber auch einer Anreicherung von Nitrat in Kulturpflanzenbeständen, speziell Futterkulturen, entgegengewirkt wird.

Bekannte Lösungen stellen neben substituierten Pyrazolen (US 3494757, DD 133088) Substanzen wie Dicyandiamid (DE 2702284, DE 2714601), Guanylthioharnstoff (JP 7301138), Thioharnstoff (DE 2051935) und 1,2,4-Triazol bzw. 4-Amino-1,2,4-triazol (JP 104135) sowie Triazolderivate dar (US 3697244, US 3701645).

Des weiteren sind Wirkstoffkombinationen empfohlen worden, die den genannten Einzelverbindungen überlegen sein sollen. Zu nennen sind hier beispielsweise Kombinationen von Pyrazolen mit Dicyandiamid (DD 222471) bzw. Guanylthioharnstoff (DD 247894), aber auch von 4-Amino-1,2,4-triazol (ATC) mit Dicyandiamid (SU 1137096) bzw. Einschmelzungen von u. a. ATC in Harnstoff/Thioharnstoff- oder Harnstoff/Dicyandiamid-Mischungen (DD 227957). Empfohlen wird gleichermaßen eine Kombination bestehend aus Dicyandiamid und Ammoniumthiosulfat (DE 3714729).

Nachteile dieser bekannten nitrifikationshemmenden Mittel bestehen in einer zum Teil zu geringen Wirksamkeit und daraus resultierenden hohen Aufwandmengen, in einer für die praktische Anwendungen sich nachteilig auswirkenden zu hohen Flüchtigkeit oder Instabilität oder aber in einem für den Anwendungszweck zu schnell verlaufenden Abbauprozeß.

Abgesehen davon wird die teilweise akzeptable Nitrifikationshemmung einiger Inhibitoren durch "Unverträglichkeitsreaktionen" mit einigen Düngemittelformen stark beeinträchtigt.

Der Erfindung liegt somit die Aufgabe zugrunde, geeignete Wirkstoffkombinationen für den Einsatz in mineralischen und organischen N-Düngemittel bereitzustellen, die eine verbesserte Wirkung bezüglich der Hemmung des Nitrifikationsprozesses aufweisen und somit einen vorteilhafteren Einsatz gegenüber den Einzelwirkstoffen bzw. den oben genannten Kombinationen ermöglichen.

Überraschenderweise wurde gefunden, daß bei der Verwendung von Wirkstoffkombinationen, bestehend aus 1H-1,2,4-Triazol oder einem substituierten 1H-1,2,4-Triazol bzw. deren Salzen oder Metallkomplexen und mindestens einer weiteren Verbindung, ausgewählt aus der Gruppe der substituierten Pyrazole, deren Salze oder Metallkomplexe, Dicyandiamid, Guanylthioharnstoff; Thioharnstoff, Ammoniumrhodanid, Ammoniumthiosulfat, wobei das Mischungsverhältnis der resultierenden Zweierkombinationen zwischen 0,5 : 99,5 und 99,5 : 0,5 liegt und im Falle von Kombinationen mit mehr als zwei Wirkstoffkomponenten beliebig sein kann, zur Hemmung bzw. Regelung der Nitrifikation in Kulturböden und Substraten deutliche synergistische Effekte erzielt werden und gegenüber den Einzelverbindungen dadurch eine Wirkungsverbesserung hervorgerufen wird.

Die erfindungsgemäße Verwendung dieser Wirkstoffkombinationen ermöglicht, den Nitrifikationsprozeß über einen längeren Zeitraum zu hemmen und trägt somit zu einer gesicherten Ausnutzung des ausgebrachten Düngemittelstickstoffs bei. Diese verbesserte Wirkung wird sogar noch mit reduzierten Aufwandmengen erzielt. Damit verbunden ist eine Steigerung der Biomasseproduktion bei Kulturpflanzen zu beobachten.

Die Nitrifikationsinhibitorkombinationen können im Gemisch mit flüssigen oder festen mineralischen oder organischen Düngemitteln, die Amid- und/oder Ammoniumstickstoff enthalten, angewendet werden.

Die Wirkstoffkombinationen werden dabei vorzugsweise mit Aufwandmengen von 0,5 bis 20 kg/ha ausgebracht.

Die nachfolgenden Beispiele dienen der Erläuterung der Erfindung, ohne diese einzuschränken. Während in Tabelle 1 eine Auswahl der in die Untersuchungen einbezogenen 1H-1,2,4-Triazole, deren Salze und Metallkomplexe als Basiskombinationspartner getroffen wurde, sind in Tabelle 2 die zu den ausgewählten Triazolderivaten eingesetzten Kombinationspartner zusammengestellt.

Tabelle 1

| Symbol | Bezeichnung/Formel |
|---|---|
| Tr | 1H-1,2,4-Triazol |
| Tr x HCl | 1H-1,2,4-Triazol x HCl |
| HMT | 1-Hydroxymethyl-1,2,4-triazol x HCl |
| Na-Tr | 1-Natrium-1,2,4-triazolat |
| Fe-Tr | $[Fe(Tr)_6]Cl_3$ |
| GTr | 1-Guanyl-1,2,4-triazol x HCl |
| CTS | $[Cu(Tr)_2]SO_4$ x $2H_2O$ |
| MT | $[Mn(Tr)_4]Cl_2$ |

Tabelle 2

| Symbol | Bezeichnung/Formel |
|---|---|
| GTH | Guanylharnstoff |
| TH | Thioharnstoff |
| AR | Ammoniumrhodanid |
| DCD | Dicyandiamid |
| ATS | Ammoniumthiosulfat |
| MP | 3-Methylpyrazol |
| CMP | 1-Carbamoyl-3-methylpyrazol |
| GMP | 1-Guanyl-3-methylpyrazol x HCl |
| Mg-MP | Magnesium-3-methylpyrazolat |
| Zn-MP | $[Zn(MP)_2]SO_4$ |
| GZC | $(GMPH)_2[ZnCl_4]$ |
| GM | $Mg(GMP)_2Cl_2$ x $H_2O$ |

In den nachfolgend aufgeführten Beispielen wurde die Kombinationswirkung der geprüften Wirkstoffkombinationen einheitlich nach der gleichen Methodik bestimmt.

Beispiele

Die Kombinationen wurden in den den nachfolgenden Tabellen zu entnehmenden substanz- bzw. kombinationspezifischen Konzentrationsreihen (Angabe in ppm bezogen auf Bodenmasse) gemeinsam mit Harnstoff als N-Quelle einem schwarzerdeähnlichen sandigen Lehmboden zugesetzt, auf 50 % der maximalen Wasserkapazität des Bodens gebracht und innig vermischt.
Die Höhe der N-Gabe betrug 10 mg N/100 g Boden. Die so präparierten Bodenproben wurden in Plasteflaschen gefüllt, verschlossen, bei 20 °C inkubiert und der zeitliche Verlauf der Nitratbildung sowie die Ammoniumstickstoffabnahme verfolgt.
Die prozentuale Hemmung errechnet sich dabei nach folgender Formel:

$$\text{Hemmung in \%} = \frac{K\text{-}W}{K\text{-}B} \times 100$$

K = Nitratgehalt der Bodenprobe mit N-Dünger ohne Wirkstoff
W = Nitratgehalt der Bodenprobe mit N-Dünger und Wirkstoff
B = Nitratgehalt der Bodenprobe ohne N-Dünger und ohne Wirkstoff

Über die prozentuale Hemmung in Abhängigkeit vom zeitlichen Verlauf der Nitrifikationsdynamik wird mittels nichtlinearer Regression der $t_{50}$-Wert als Wirkungskriterium ermittelt, der den Zeitpunkt in Tagen ausgedrückt widerspiegelt, an dem die Hemmwirkung nur noch 50 % beträgt.
Die so ermittelten $t_{50}$-Werte wurde einer Logit-Probit-Transformation (Linearisierung der Dosis-Wirkungs-Kurve) unterzogen, um die Kombinationswirkung nach dem Unabhängigkeitsmodell von GROEGER u. a. (Pharmazie 36 (1981), S. 81-87), das eine Verallgemeinerung der Ansätze von GOWING (Weeds 8 (1960), S. 379-391) bzw. COLBY (Weeds 15 (1967), S. 20-22) verkörpert, berechnen zu können. Danach wird die Kombinationswirkung als synergistisch bezeichnet, wenn sie besser als die aus den Einzelwirkungen der betreffenden Mischungspartner resultierende Wirkung bzw. wenn die für eine vorgegebene Wirkung benötigte Dosis geringer als die berechnete ist.

**Beispiel 1: Kombination 1H-1,2,4-Triazol/DCD**

Nach der oben beschriebenen Versuchsmethodik wurden für Triazol (Tr) und DCD sowie deren Kombinationen die $t_{50}$-Werte ermittelt und verrechnet.

Tabelle 3a: $t_{50}$-Werte des 1H-1,2,4-Triazols, des DCD und deren Kombinationen

| 1H-1,2,4-Triazol (ppm) | DCD (ppm) | Mischungs- verhältnis Triazol:DCD | $t_{50}$-Werte (Tage) |
|---|---|---|---|
| 0,096 | | | 5,5 |
| 0,227 | | | 14,0 |
| 0,545 | | | 30,0 |
| 0,909 | | | 41,5 |
| 1,25 | | | 46,0 |
| 2,0 | | | 50,0 |
| 3,0 | | | 52,3 |
| 5,0 | | | 57,0 |
| | 1,25 | | 10,0 |
| | 2,0 | | 14,3 |
| | 3,0 | | 17,6 |
| | 3,846 | | 19,7 |
| | 5,0 | | 22,0 |
| | 5,882 | | 23,6 |
| | 8,333 | | 27,3 |
| | 9,091 | | 28,4 |
| | 10,0 | | 29,6 |
| 5,0 | 5,0 | 50 : 50 | 73,8 |
| 3,0 | 3,0 | | 58,2 |
| 2,0 | 2,0 | | 57,1 |
| 1,25 | 1,25 | | 52,5 |
| 1,667 | 8,333 | 17 : 83 | 106,6 |
| 1,0 | 5,0 | | 71,5 |
| 0,667 | 3,333 | | 53,7 |
| 0,417 | 2,083 | | 37,1 |
| 0,909 | 9,091 | 9 : 91 | 111,8 |
| 0,545 | 5,445 | | 69,4 |
| 0,364 | 3,636 | | 45,5 |
| 0,227 | 2,273 | | 28,7 |
| 0,25 | 3,75 | 6 : 94 | 37,3 |
| 0,156 | 2,344 | | 23,9 |

## Tabelle 3a:  Fortsetzung

| 1H-1,2,4-Triazol (ppm) | DCD (ppm) | Mischungs-verhältnis Triazol:DCD | $t_{50}$-Werte (Tage) |
|---|---|---|---|
| 0,19<br>0,119 | 3,81<br>2,38 | 5 : 95 | 32,1<br>22,2 |
| 0,385<br>0,231<br>0,154<br>0,096 | 9,615<br>5,769<br>3,846<br>2,404 | 4 : 96 | 73,5<br>41,5<br>29,6<br>21,3 |
| 0,196<br>0,118 | 9,804<br>5,882 | 2 : 98 | 48,1<br>31,2 |

Tabelle 3b

| Prozentuale Wirkstoffeinsparung bzw. Wirkungsverbesserung berechnet nach dem Unabhängigkeitsmodell (UAM) | | | | | |
|---|---|---|---|---|---|
| Mischungsverhältnis Tr : DCD | Konzentration der Kombination (ppm) | Wirkung im Ver-such | Wirkung nach UAM | Wirkungsverbes-serung | Dosiseinspa-rung (%) |
| 50 : 50 | 10 | 74 | 82 | - 8 | -53 |
|  | 6 | 58 | 72 | -14 | -68 |
|  | 4 | 57 | 61 | - 4 | -17 |
|  | 2,5 | 52 | 48 | 4 | 14 |
| 17 : 83 | 10 | 100 | 64 | 36 | - |
|  | 6 | 71 | 50 | 21 | 55 |
|  | 4 | 54 | 39 | 14 | 42 |
|  | 2,5 | 37 | 29 | 8 | 31 |
| 9 : 91 | 10 | 100 | 53 | 47 | - |
|  | 6 | 69 | 40 | 29 | 69 |
|  | 4 | 45 | 31 | 14 | 47 |
|  | 2,5 | 29 | 23 | 6 | 29 |
| 6 : 94 | 4 | 47 | 37 | 10 | 36 |
|  | 2,5 | 30 | 28 | 2 | 12 |
| 5 : 95 | 4 | 40 | 34 | 6 | 25 |
|  | 2,5 | 28 | 26 | 2 | 11 |

Tabelle 3b (fortgesetzt)

| Prozentuale Wirkstoffeinsparung bzw. Wirkungsverbesserung berechnet nach dem Unabhängigkeitsmodell (UAM) | | | | | |
|---|---|---|---|---|---|
| Mischungsverhältnis Tr : DCD | Konzentration der Kombination (ppm) | Wirkung im Ver-such | Wirkung nach UAM | Wirkungsverbes-serung | Dosiseinspa-rung (%) |
| 4 : 96 | 10 | 92 | 52 | 40 | - |
|  | 6 | 52 | 61 | 9 | 40 |
|  | 4 | 37 | 33 | 4 | 21 |
|  | 2,5 | 27 | 25 | 2 | 11 |
| 2 : 98 | 10 | 60 | 46 | 14 | 48 |
|  | 6 | 39 | 36 | 3 | 17 |

**Beispiel 2: Kombination 1H-1,2,4-Triazol/GTH**

Testmethodik und EDV-gestützte Auswertung analog Beispiel 1

Tabelle 4a

| $t_{50}$-Werte der Einzelverbindungen und der einzelnen Kombinationen von Triazol mit Guanylthioharnstoff (GTH) | | | |
|---|---|---|---|
| 1H-1,2,4-Triazol (ppm) | GTH (ppm) | Mischungsverhältnis Triazol:GTH | $t_{50}$-Werte (Tage) |
| 0,096 |  |  | 5,5 |
| 0,227 |  |  | 14,0 |
| 0,545 |  |  | 30,0 |
| 0,909 |  |  | 41,5 |
| 1,25 |  |  | 46,0 |
| 2,0 |  |  | 50,0 |
| 3,0 |  |  | 52,3 |
| 5,0 |  |  | 57,0 |
|  | 2,0 |  | 1,0 |
|  | 4,0 |  | 9,3 |
|  | 6,0 |  | 18,4 |
|  | 8,0 |  | 28,0 |
|  | 10,0 |  | 37,4 |
|  | 12,0 |  | 47,2 |
| 5,0 | 5,0 | 50 : 50 | 63,4 |
| 2,5 | 2,5 |  | 53,8 |
| 1,25 | 1,25 |  | 40,3 |

Tabelle 4a (fortgesetzt)

| $t_{50}$-Werte der Einzelverbindungen und der einzelnen Kombinationen von Triazol mit Guanylthioharnstoff (GTH) | | | |
|---|---|---|---|
| 1H-1,2,4-Triazol (ppm) | GTH (ppm) | Mischungsverhältnis Triazol:GTH | $t_{50}$-Werte (Tage) |
| 0,909 | 9,091 | 9 : 91 | 81,8 |
| 0,545 | 5,445 | | 70,3 |
| 0,227 | 2,273 | | 19,2 |
| 0,385 | 9,615 | 4 : 96 | 60,5 |
| 0,231 | 5,769 | | 35,4 |
| 0,154 | 3,846 | | 25,1 |
| 0,196 | 9,804 | 2 : 98 | 49,4 |
| 0,118 | 5,882 | | 28,9 |

Tabelle 4b

| Prozentuale Wirkstoffeinsparung bzw. Wirkungsverbesserung berechnet nach dem Unabhängigkeitsmodell (UAM) | | | | | |
|---|---|---|---|---|---|
| Mischungsverhältnis Tr : GTH | Konzentration der Kombination (ppm) | Wirkung im Versuch | Wirkung nach UAM | Wirkungsverbesserung | Dosiseinsparung (%) |
| 50 : 50 | 10 | 95 | 95 | 0 | - 4 |
| | 5 | 81 | 86 | - 6 | -29 |
| | 2,5 | 68 | 68 | 0 | 1 |
| 9 : 91 | 10 | 100 | 74 | 26 | 89 |
| | 6 | 100 | 53 | 47 | 93 |
| | 2,5 | 29 | 21 | 8 | 23 |
| 4 : 96 | 10 | 91 | 59 | 32 | 62 |
| | 6 | 54 | 38 | 16 | 32 |
| | 4 | 38 | 24 | 14 | 34 |
| 2 : 98 | 10 | 74 | 51 | 23 | 44 |
| | 6 | 43 | 32 | 11 | 27 |

**Beispiel 3: Kombination 1H-1,2,4-Triazol/Thioharnstoff**

Testmethodik und EDV-gestützte Auswertung analog Beispiel 1

Tabelle 5a

| $t_{50}$-Werte der Einzelverbindungen und der einzelnen Kombinationen von Triazol mit Thioharnstoff (TH) | | | |
|---|---|---|---|
| 1H-1,2,4-Triazol (ppm) | TH (ppm) | Mischungsverhältnis Triazol:TH | $t_{50}$-Werte (Tage) |
| 0,1 | | | 5,8 |
| 0,25 | | | 14,3 |
| 0,5 | | | 29,0 |
| 1,0 | | | 42,1 |
| 2,0 | | | 49,1 |
| 3,0 | | | 51,9 |
| 5,0 | | | 56,2 |
| | 2,0 | | 6,5 |
| | 4,0 | | 8,5 |
| | 8,0 | | 10,5 |
| | 10,0 | | 12,6 |
| | 16,0 | | 17,3 |
| 3,0 | 3,0 | 50 : 50 | 58,2 |
| 2,0 | 2,0 | | 54,8 |
| 0,909 | 9,091 | 9 : 91 | 49,9 |
| 0,545 | 5,445 | | 42,2 |
| 0,227 | 2,273 | | 27,1 |
| 0,385 | 9,615 | 4 : 96 | 37,1 |
| 0,154 | 3,846 | | 24,7 |
| 0,096 | 2,404 | | 14,9 |
| 0,196 | 9,804 | 2 : 98 | 26,4 |
| 0,118 | 5,882 | | 18,0 |

Tabelle 5b

| Prozentuale Wirkstoffeinsparung bzw. Wirkungsverbesserung berechnet nach dem Unabhängigkeitsmodell (UAM) | | | | | |
|---|---|---|---|---|---|
| Mischungsverhältnis Tr : TH | Konzentration der Kombination (ppm) | Wirkung im Versuch | Wirkung nach UAM | Wirkungsverbesserung | Dosiseinsparung (%) |
| 50 : 50 | 6 | 87 | 80 | 7 | 40 |
| | 4 | 82 | 72 | 10 | 42 |
| 9 : 91 | 10 | 75 | 63 | 12 | 39 |
| | 6 | 63 | 49 | 14 | 41 |
| | 2,5 | 40 | 28 | 12 | 42 |
| 4 : 96 | 10 | 55 | 48 | 8 | 24 |
| | 4 | 37 | 26 | 11 | 40 |
| | 2,5 | 22 | 18 | 5 | 25 |
| 2 : 98 | 10 | 40 | 38 | 1 | 5 |
| | 6 | 27 | 27 | 0 | 2 |

**Beispiel 4: Kombination 1H-1,2,4-Triazol/Ammoniumrhodanid**

Testmethodik und EDV-gestützte Auswertung analog Beispiel 1

Tabelle 6a

| $t_{50}$-Werte der Einzelverbindungen und der einzelnen Kombinationen von Triazol mit Ammoniumrhodanid (AR) | | | |
|---|---|---|---|
| 1H-1,2,4-Triazol (ppm) | AR (ppm) | Mischungsverhältnis Triazol:AR | $t_{50}$-Werte (Tage) |
| 0,096 | | | 5,5 |
| 0,227 | | | 14,0 |
| 0,545 | | | 30,0 |
| 0,909 | | | 41,5 |
| 1,25 | | | 46,0 |
| 2,0 | | | 50,0 |
| 3,0 | | | 52,3 |
| 5,0 | | | 57,0 |
| | 2,0 | | 3,1 |
| | 4,0 | | 6,3 |
| | 8,0 | | 8,5 |
| | 10,0 | | 9,3 |
| | 16,0 | | 11,9 |

Tabelle 6a (fortgesetzt)

| $t_{50}$-Werte der Einzelverbindungen und der einzelnen Kombinationen von Triazol mit Ammoniumrhodanid (AR) | | | |
|---|---|---|---|
| 1H-1,2,4-Triazol (ppm) | AR (ppm) | Mischungsverhältnis Triazol:AR | $t_{50}$-Werte (Tage) |
| 3,0 | 3,0 | 50 : 50 | 56,9 |
| 2,0 | 2,0 | | 52,5 |
| 1,25 | 1,25 | | 46,3 |
| 0,545 | 5,445 | 9 : 91 | 61,6 |
| 0,364 | 3,636 | | 40,8 |
| 0,227 | 2,273 | | 35,1 |
| 0,19 | 3,81 | 5 : 95 | 33,7 |
| 0,119 | 2,38 | | 25,7 |
| 0,196 | 9,804 | 2 : 98 | 29,1 |
| 0,118 | 5,882 | | 22,4 |

Tabelle 6b

| Prozentuale Wirkstoffeinsparung bzw. Wirkungsverbesserung berechnet nach dem Unabhängigkeitsmodell (UAM) | | | | | |
|---|---|---|---|---|---|
| Mischungsverhältnis Tr : AR | Konzentration der Kombination (ppm) | Wirkung im Ver-such | Wirkung nach UAM | Wirkungsverbes-serung | Dosiseinspa-rung (%) |
| 50 : 50 | 6 | 57 | 57 | 0 | - 2 |
| | 4 | 52 | 49 | 3 | 15 |
| | 2,5 | 46 | 39 | 7 | 29 |
| 9 : 91 | 6 | 62 | 30 | 32 | 79 |
| | 4 | 41 | 24 | 17 | 62 |
| | 2,5 | 35 | 17 | 18 | 68 |
| 5 : 95 | 4 | 34 | 18 | 16 | 66 |
| | 2,5 | 26 | 12 | 14 | 66 |
| 2 : 98 | 10 | 29 | 22 | 7 | 36 |
| | 6 | 22 | 16 | 6 | 41 |

**Beispiel 5: Kombination 1-Hydroxymethyl-1,2,4-triazol x HCl/GTH**

Testmethodik und EDV-gestützte Auswertung analog Beispiel 1

Tabelle 7a

| $t_{50}$-Werte der Einzelverbindungen sowie deren Kombinationen | | | |
|---|---|---|---|
| HMT (ppm) | GTH (ppm) | Mischungsverhältnis HMT:GTH | $t_{50}$-Werte (Tage) |
| 0,25 | | | 14,8 |
| 0,5 | | | 22,9 |
| 0,75 | | | 29,7 |
| 1,0 | | | 37,4 |
| 2,0 | | | 44,1 |
| 5,0 | | | 50,0 |
| 7,5 | | | 57,1 |
| | 1,0 | | 1,1 |
| | 2,0 | | 3,4 |
| | 4,0 | | 10,2 |
| | 8,0 | | 29,1 |
| | 10,0 | | 38,2 |
| 5,0 | 1,0 | 83 : 17 | 53,1 |
| 2,5 | 0,5 | | 44,2 |
| 1,25 | 0,25 | | 38,7 |
| 3,0 | 3,0 | 50 : 50 | 52,1 |
| 1,5 | 1,5 | | 43,1 |
| 1,0 | 5,0 | 17 : 83 | 56,9 |
| 0,5 | 2,5 | | 29,1 |
| 0,545 | 5,455 | 9 : 91 | 64,9 |
| 0,273 | 2,727 | | 28,3 |
| 0,286 | 5,714 | 5 : 95 | 61,7 |
| 0,143 | 2,857 | | 23,9 |
| 0,118 | 5,882 | 2 : 98 | 39,4 |

Tabelle 7b

| Prozentuale Wirkstoffeinsparung bzw. Wirkungsverbesserung berechnet nach dem Unabhängigkeitsmodell (UAM) | | | | | |
|---|---|---|---|---|---|
| Mischungsverhältnis HMT : GTH | Konzentration der Kombination (ppm) | Wirkung im Ver-such | Wirkung nach UAM | Wirkungsverbes-serung | Dosiseinspa-rung (%) |
| 83 : 17 | 6 | 80 | 87 | - 7 | -50 |
| | 3 | 66 | 73 | - 7 | -32 |
| | 2,5 | 58 | 54 | 4 | 11 |
| 50 : 50 | 6 | 78 | 80 | - 2 | -10 |
| | 3 | 65 | 62 | 3 | 8 |
| 17 : 83 | 6 | 85 | 59 | 26 | 59 |
| | 3 | 44 | 36 | 8 | 21 |
| 9 : 91 | 6 | 97 | 47 | 50 | 88 |
| | 3 | 42 | 26 | 16 | 42 |
| 5 : 95 | 6 | 92 | 38 | 56 | 85 |
| | 3 | 36 | 20 | 16 | 47 |
| 2 : 98 | 6 | 59 | 31 | 28 | 59 |

**Beispiel 6: Kombination 1-Natrium-1,2,4-triazolat/DCD**

Testmethodik und EDV-gestützte Auswertung analog Beispiel 1

Tabelle 8a

| $t_{50}$-Werte der Einzelverbindungen sowie deren Kombinationen | | | |
|---|---|---|---|
| Na-Tr (ppm) | DCD (ppm) | Mischungsverhältnis Na-Tr:DCD | $t_{50}$-Werte (Tage) |
| 0,25 | | | 9,7 |
| 0,5 | | | 21,4 |
| 0,75 | | | 26,1 |
| 1,0 | | | 31,9 |
| 1,5 | | | 33,7 |
| 2,0 | | | 38,4 |
| 5,0 | | | 41,8 |
| | 1,0 | | 12,4 |
| | 2,0 | | 22,1 |
| | 4,0 | | 26,1 |
| | 6,0 | | 29,6 |
| | 10,0 | | 38,1 |

Tabelle 8a (fortgesetzt)

| t$_{50}$-Werte der Einzelverbindungen sowie deren Kombinationen | | | |
|---|---|---|---|
| Na-Tr (ppm) | DCD (ppm) | Mischungsverhältnis Na-Tr:DCD | t$_{50}$-Werte (Tage) |
| 5,0 | 1,0 | 83 : 17 | 52,1 |
| 2,5 | 0,5 | | 46,7 |
| 3,0 | 3,0 | 50 : 50 | 60,1 |
| 1,5 | 1,5 | | 51,9 |
| 1,0 | 5,0 | 17 : 83 | 73,2 |
| 0,5 | 2,5 | | 51,4 |
| 0,545 | 5,455 | 9 : 91 | 64,2 |
| 0,273 | 2,727 | | 42,9 |
| 0,231 | 5,769 | 4 : 96 | 47,9 |
| 0,115 | 2,885 | | 35,1 |

Tabelle 8b

| Prozentuale Wirkstoffeinsparung bzw. Wirkungsverbesserung berechnet nach dem Unabhängigkeitsmodell (UAM) | | | | | |
|---|---|---|---|---|---|
| Mischungsverhältnis Na-Tr : DCD | Konzentration der Kombination (ppm) | Wirkung im Versuch | Wirkung nach UAM | Wirkungsverbesserang | Dosiseinsparung (%) |
| 83 : 17 | 6 | 78 | 79 | - 1 | - 5 |
| | 3 | 70 | 65 | 5 | 20 |
| 50 : 50 | 6 | 90 | 77 | 13 | 55 |
| | 3 | 78 | 61 | 17 | 51 |
| 17 : 83 | 6 | 100 | 68 | 32 | - |
| | 3 | 77 | 50 | 27 | 66 |
| 9 : 91 | 6 | 96 | 63 | 33 | - |
| | 3 | 64 | 45 | 19 | 53 |
| 4 : 96 | 6 | 72 | 57 | 15 | 47 |
| | 3 | 53 | 40 | 13 | 41 |

**Beispiel 7: 1H-1,2,4-Triazol/MP**

Testmethodik und EDV-gestützte Auswertung analog Beispiel 1

Tabelle 9a

| $t_{50}$-Werte der Einzelverbindungen sowie deren Kombinationen | | | |
|---|---|---|---|
| Tr (ppm) | MP (ppm) | Mischungsverhältnis Tr : MP | $t_{50}$-Werte (Tage) |
| 0,1 | | | 5,3 |
| 0,25 | | | 14,9 |
| 0,5 | | | 27,8 |
| 0,75 | | | 36,8 |
| 1,0 | | | 41,9 |
| 1,5 | | | 48,7 |
| 3,0 | | | 56,9 |
| | 0,1 | | 9,1 |
| | 0,25 | | 24,5 |
| | 0,5 | | 43,6 |
| | 0,656 | | 46,3 |
| | 1,0 | | 48,7 |
| | 2,0 | | 52,3 |
| 1,0 | 1,0 | 50 : 50 | 95,6 |
| 0,5 | 0,5 | | 72,7 |
| 1,818 | 0,182 | 91 : 9 | 69,8 |
| 0,909 | 0,091 | | 51,7 |
| 1,923 | 0,077 | 96 : 4 | 59,8 |
| 0,962 | 0,038 | | 42,8 |
| 0,077 | 1,923 | 4 : 96 | 61,0 |
| 0,038 | 0,962 | | 52,4 |

Tabelle 9b

| Prozentuale Wirkstoffeinsparung bzw. Wirkungsverbesserung berechnet nach dem Unabhängigkeitsmodell (UAM) | | | | | |
|---|---|---|---|---|---|
| Mischungsverhältnis Tr : MP | Konzentration der Kombination (ppm) | Wirkung im Ver-such | Wirkung nach UAM | Wirkungsverbes-serung | Dosiseinspa-rung (%) |
| 50 : 50 | 2 | 100 | 90 | 10 | 86 |
| | 1 | 100 | 74 | 26 | 93 |

Tabelle 9b (fortgesetzt)

| Prozentuale Wirkstoffeinsparung bzw. Wirkungsverbesserung berechnet nach dem Unabhängigkeitsmodell (UAM) | | | | | |
|---|---|---|---|---|---|
| Mischungsverhältnis Tr : MP | Konzentration der Kombination (ppm) | Wirkung im Versuch | Wirkung nach UAM | Wirkungsverbesserung | Dosiseinsparung (%) |
| 91 : 9 | 2 | 100 | 83 | 17 | 88 |
| | 1 | 77 | 64 | 13 | 36 |
| 96 : 4 | 2 | 90 | 81 | 9 | 40 |
| | 1 | 64 | 63 | 1 | 5 |
| 4 : 96 | 2 | 91 | 88 | 3 | 27 |
| | 1 | 79 | 74 | 5 | 18 |

**Beispiel 8: Kombination Kupfertriazolkomplex/1-Guanyl-3-methylpyrazoliumzinkatkomplex**

Testmethodik und EDV-gestützte Auswertung analog Beispiel 1

Tabelle 10a

| $t_{50}$-Werte der Einzelverbindungen sowie deren Kombinationen | | | |
|---|---|---|---|
| CTS (ppm) | GZC (ppm) | Mischungsverhältnis CTS : GZC | $t_{50}$-Werte (Tage) |
| 0,1 | | | 1,9 |
| 0,25 | | | 4,9 |
| 0,5 | | | 11,6 |
| 1,2 | | | 27,0 |
| 1,8 | | | 36,1 |
| 2,5 | | | 43,1 |
| | 0,25 | | 9,5 |
| | 0,5 | | 19,1 |
| | 0,75 | | 26,8 |
| | 1,5 | | 43,3 |
| | 3,0 | | 59,1 |
| 1,0 | 1,0 | 50 : 50 | 77,2 |
| 0,5 | 0,5 | | 53,6 |
| 0,25 | 0,25 | | 21,9 |
| 1,818 | 0,182 | 91 : 9 | 45,9 |
| 0,909 | 0,091 | | 27,8 |
| 0,182 | 1,818 | 9 : 91 | 53,6 |
| 0,091 | 0,909 | | 30,0 |

Tabelle 10b

| Prozentuale Wirkstoffeinsparung bzw. Wirkungsverbesserung berechnet nach dem Unabhängigkeitsmodell (UAM) | | | | | |
|---|---|---|---|---|---|
| Mischungsverhältnis CTS : GZC | Konzentration der Kombination (ppm) | Wirkung im Ver-such | Wirkung nach UAM | Wirkungsverbes-serung | Dosiseinspa-rung (%) |
| 50 : 50 | 2 | 100 | 72 | 28 | 84 |
| | 1 | 80 | 42 | 38 | 61 |
| | 0,5 | 33 | 19 | 14 | 37 |
| 91 : 9 | 2 | 69 | 64 | 5 | 14 |
| | 1 | 42 | 36 | 6 | 13 |
| 9 : 91 | 2 | 80 | 74 | 5 | 16 |
| | 1 | 45 | 51 | - 5 | -15 |

**Beispiel 9: Kombination 1H-1,2,4-Triazol/Dicyandiamid/Ammoniumrhodanid**

Testmethodik und EDV-gestützte Auswertung analog Beispiel 1

Tabelle 11a

| $t_{50}$-Werte der Einzelverbindungen sowie deren Kombinationen | | | | |
|---|---|---|---|---|
| Tr (ppm) | DCD (ppm) | AR (ppm) | Mischungsverhältnis Tr : DCD : AR | $t_{50}$-Werte (Tage) |
| 0,096 | | | | 5,5 |
| 0,227 | | | | 13,8 |
| 0,545 | | | | 30,2 |
| 0,909 | | | | 41,5 |
| 1,25 | | | | 46,0 |
| 2,0 | | | | 50,1 |
| 3,0 | | | | 52,3 |
| 5,0 | | | | 57,0 |
| | 1,25 | | | 10,1 |
| | 2,0 | | | 14,3 |
| | 3,0 | | | 17,6 |
| | 3,846 | | | 19,7 |
| | 5,0 | | | 22,1 |
| | 5,882 | | | 23,6 |
| | 8,333 | | | 27,4 |
| | 10,0 | | | 29,6 |
| | | 2,0 | | 2,8 |
| | | 4,0 | | 6,3 |

Tabelle 11a (fortgesetzt)

| t$_{50}$-Werte der Einzelverbindungen sowie deren Kombinationen | | | | |
|---|---|---|---|---|
| Tr (ppm) | DCD (ppm) | AR (ppm) | Mischungsverhältnis Tr : DCD : AR | t$_{50}$-Werte (Tage) |
| | | 8,0 | | 8,5 |
| | | 10,0 | | 9,3 |
| | | 16,0 | | 11,9 |
| 0,833 | 4,167 | 0,833 | 14,3 : 71,4 : 14,3 | 67,1 |
| 0,5 | 2,5 | 0,5 | | 52,4 |
| 0,385 | 3,846 | 0,769 | 7,7 : 76,9 : 15,4 | 58,9 |
| 0,231 | 2,308 | 0,462 | | 37,7 |
| 0,192 | 3,846 | 0,962 | 3,8 : 77 : 19,2 | 45,7 |
| 0,115 | 2,308 | 0,575 | | 34,7 |

Tabelle 11b

| Prozentuale Wirkstoffeinsparung bzw. Wirkungsverbesserung berechnet nach dem Unabhängigkeitsmodell (UAM) | | | | | |
|---|---|---|---|---|---|
| Mischungsverhältnis Tr:DCD:AR | Konzentration der Kombination (ppm) | Wirkung im Versuch | Wirkung nach UAM | Wirkungsverbesserung | Dosiseinsparung (%) |
| 14,3:71,4:14,3 | 5,83 | 100 | 67 | 33 | - |
| | 3,5 | 79 | 53 | 26 | 61 |
| 7,7:76,9:15,4 | 5,0 | 89 | 53 | 36 | 75 |
| | 3,0 | 57 | 39 | 18 | 46 |
| 3,8:77:19,2 | 5,0 | 69 | 44 | 25 | 56 |
| | 3,0 | 52 | 31 | 21 | 54 |

**Beispiel 10:**

**Kombination 1H-1,2,4-Triazolhydrochlorid/Guanylthioharnstoff/Thioharnstoff**

Testmethodik und EDV-gestützte Auswertung analog Beispiel 1

Tabelle 12a

| t$_{50}$-Werte der Einzelverbindungen sowie deren Kombinationen | | | | |
|---|---|---|---|---|
| TrxHCl (ppm) | GTH (ppm) | TH (ppm) | Mischungsverhältnis TrxHCl : GTH : TH | t$_{50}$-Werte (Tage) |
| 0,15 | | | | 5,0 |
| 0,3 | | | | 11,5 |
| 0,75 | | | | 28,4 |

Tabelle 12a (fortgesetzt)

| t$_{50}$-Werte der Einzelverbindungen sowie deren Kombinationen | | | | |
|---|---|---|---|---|
| TrxHCl (ppm) | GTH (ppm) | TH (ppm) | Mischungsverhältnis Trx-HCl : GTH : TH | t$_{50}$-Werte (Tage) |
| 1,5 | | | | 41,3 |
| 3,0 | | | | 48,9 |
| 4,5 | | | | 52,1 |
| | 2,0 | | | 1,9 |
| | 4,0 | | | 9,5 |
| | 8,0 | | | 28,1 |
| | 10,0 | | | 37,0 |
| | 16,0 | | | 60,1 |
| | | 2,0 | | 6,3 |
| | | 4,0 | | 8,7 |
| | | 8,0 | | 10,9 |
| | | 10,0 | | 13,0 |
| | | 16,0 | | 18,1 |
| 0,115 | 2,308 | 0,577 | 3,8 : 77 : 19,2 | 17,9 |
| 0,231 | 4,615 | 1,155 | | 44,8 |
| 0,115 | 1,422 | 1,422 | 3,8 : 48,1 : 48,1 | 11,9 |
| 0,231 | 2,885 | 2,885 | | 37,9 |
| 0,231 | 1,155 | 4,615 | 3,8 : 19,2 : 77 | 27,8 |
| 0,5 | 2,0 | 0,5 | 17 : 66 : 17 | 53,1 |
| 0,5 | 1,25 | 1,25 | 16,6 : 41,7 : 41,7 | 39,9 |
| 0,188 | 1,875 | 0,937 | 6,3 : 62,5 : 31,2 | 21,3 |
| 0,375 | 3,75 | 1,875 | | 47,1 |

Tabelle 12b

| Prozentuale Wirkstoffeinsparung bzw. Wirkungsverbesserung berechnet nach dem Unabhängigkeitsmodell (UAM) | | | | | |
|---|---|---|---|---|---|
| Mischungsver-hältnis Trx-HCl:GTH:TH | Konzentration der Kombination (ppm) | Wirkung im Ver-such | Wirkung nach UAM | Wirkungsverbes-serung | Dosiseinspa-rung (%) |
| 3,8:77:19,2 | 3,0 | 27 | 16 | 11 | 36 |
| | 6,0 | 67 | 35 | 32 | 57 |
| 3,8:48,1:48,1 | 3,0 | 19 | 12 | 7 | 28 |
| | 6,0 | 57 | 30 | 27 | 51 |
| 3,8:19,2:77 | 6,0 | 42 | 25 | 17 | 40 |
| 17:66:17 | 3,0 | 81 | 33 | 48 | 74 |
| 16,6:41,7:41,7 | 3,0 | 60 | 30 | 30 | 55 |

Tabelle 12b (fortgesetzt)

| Prozentuale Wirkstoffeinsparung bzw. Wirkungsverbesserung berechnet nach dem Unabhängigkeitsmodell (UAM) | | | | | |
|---|---|---|---|---|---|
| Mischungsverhältnis Trx-HCl:GTH:TH | Konzentration der Kombination (ppm) | Wirkung im Versuch | Wirkung nach UAM | Wirkungsverbesserung | Dosiseinsparung (%) |
| 6,3:62,5:31,2 | 3,0 | 33 | 17 | 16 | 43 |
| | 6,0 | 71 | 38 | 33 | 56 |

**Beispiel 11: Kombination 1-Guanyl-1,2,4-triazolxHCl/DCD/Thioharnstoff**

Testmethodik und EDV-gestützte Auswertung analog Beispiel 1

Tabelle 13a

| $t_{50}$-Werte der Einzelverbindungen sowie deren Kombinationen | | | | |
|---|---|---|---|---|
| GTr (ppm) | DCD (ppm) | TH (ppm) | Mischungsverhältnis GTr : DCD : TH | $t_{50}$-Werte (Tage) |
| 1,4 | | | | 27,5 |
| 2,14 | | | | 37,5 |
| 4,3 | | | | 47,3 |
| 8,5 | | | | 49,2 |
| 10,0 | | | | 55,2 |
| | 1,0 | | | 8,9 |
| | 2,0 | | | 14,2 |
| | 3,0 | | | 17,1 |
| | 5,0 | | | 22,3 |
| | 8,0 | | | 26,8 |
| | 10,0 | | | 30,1 |
| | | 2,0 | | 6,3 |
| | | 4,0 | | 8,7 |
| | | 8,0 | | 10,9 |
| | | 10,0 | | 13,0 |
| | | 16,0 | | 18,1 |
| 0,192 | 3,840 | 0,968 | 3,8 : 76,8 : 19,4 | 43,8 |
| 0,308 | 6,160 | 1,54 | | 61,7 |
| 0,192 | 2,404 | 2,404 | 3,8 : 48,1 : 48,1 | 37,4 |
| 0,308 | 3,846 | 3,846 | | 57,8 |
| 0,192 | 0,968 | 3,840 | 3,8 : 19,4 : 76,8 | 27,9 |
| 0,308 | 1,540 | 6,160 | | 32,7 |

Tabelle 13b

| Prozentuale Wirkstoffeinsparung bzw. Wirkungsverbesserung berechnet nach dem Unabhängigkeitsmodell (UAM) | | | | | |
|---|---|---|---|---|---|
| Mischungsverhältnis GTr:DCD:TH | Konzentration der (ppm) | Wirkung im Ver- such | Wirkung nach UAM | Wirkungsverbes- serung | Dosiseinspa- rung (%) |
| 3,8:76,8:19,4 | 5,0 | 66 | 48 | 18 | 60 |
|  | 8,0 | 93 | 32 | 61 | 98 |
| 3,8:48,1:48,1 | 5,0 | 56 | 46 | 10 | 40 |
|  | 8,0 | 87 | 55 | 31 | 84 |
| 3,8:19,4:76,8 | 5,0 | 42 | 42 | 0 | - 1 |
|  | 8,0 | 49 | 51 | - 2 | -10 |

**Beispiel 12: Kombination 1H-1,2,4-Triazol/DCD/Ammoniumthiosulfat**

Testmethodik und EDV-gestützte Auswertung analog Beispiel 1

Tabelle 14a

| $t_{50}$-Werte der Einzelverbindungen sowie deren Kombinationen | | | | |
|---|---|---|---|---|
| Tr (ppm) | DCD (ppm) | ATS (ppm) | Mischungsverhältnis Tr : DCD : ATS | $t_{50}$-Werte (Tage) |
| 0,096 |  |  |  | 5,5 |
| 0,227 |  |  |  | 14,0 |
| 0,545 |  |  |  | 30,0 |
| 0,909 |  |  |  | 41,5 |
| 1,25 |  |  |  | 46,0 |
| 2,0 |  |  |  | 50,0 |
| 3,0 |  |  |  | 52,3 |
| 5,0 |  |  |  | 57,0 |
|  | 1,25 |  |  | 10,0 |
|  | 2,0 |  |  | 14,3 |
|  | 3,0 |  |  | 17,6 |
|  | 3,846 |  |  | 19,7 |
|  | 5,0 |  |  | 22,0 |
|  | 5,882 |  |  | 23,6 |
|  | 8,333 |  |  | 27,3 |
|  | 9,091 |  |  | 28,4 |
|  | 10,0 |  |  | 29,6 |
|  |  | 2,0 |  | 0 |

Tabelle 14a (fortgesetzt)

| t$_{50}$-Werte der Einzelverbindungen sowie deren Kombinationen | | | | |
|---|---|---|---|---|
| Tr (ppm) | DCD (ppm) | ATS (ppm) | Mischungsverhältnis Tr : DCD : ATS | t$_{50}$-Werte (Tage) |
| | | 4,0 | | 0 |
| | | 8,0 | | 0 |
| | | 10,0 | | 0 |
| | | 16,0 | | 0 |
| 0,115 | 2,308 | 0,577 | 4 : 77 : 19 | 35,7 |
| 0,115 | 1,422 | 1,422 | 4 : 48 : 48 | 27,8 |
| 0,115 | 0,577 | 2,308 | 4 : 19 : 77 | 14,1 |

Tabelle 14b

| Prozentuale Wirkstoffeinsparung bzw. Wirkungsverbesserung berechnet nach dem Unabhängigkeitsmodell (UAM) | | | | | |
|---|---|---|---|---|---|
| Mischungsverhältnis Tr:DCD:ATS | Konzentration der Kombination (ppm) | Wirkung im Ver-such | Wirkung nach UAM | Wirkungsverbes-serung | Dosiseinspa-rung (%) |
| 4 : 77 : 19 | 3,0 | 53 | 35 | 18 | 55 |
| 4 : 48 : 48 | 3,0 | 42 | 30 | 12 | 42 |
| 4 : 19 : 77 | 3,0 | 21 | 24 | - 3 | -20 |

**Beispiel 13: Kombination Eisen-triazol-komplex/DCD/Ammoniumzhiosulfat**

Testmethodik und EDV-gestützte Auswertung analog Beispiel 1

Tabelle 15a

| t$_{50}$-Werte der Einzelverbindungen sowie deren Kombinationen | | | | |
|---|---|---|---|---|
| Fe-TR (ppm) | DCD (ppm) | ATS (ppm) | Mischungsverhältnis Fe-Tr : DCD : ATS | t$_{50}$-Werte (Tage) |
| 0,072 | | | | 3,9 |
| 0,163 | | | | 10,3 |
| 0,39 | | | | 21,2 |
| 0,65 | | | | 29,4 |
| 0,9 | | | | 33,3 |
| 1,44 | | | | 35,7 |
| 2,15 | | | | 39,4 |
| 4,0 | | | | 42,9 |
| 6,0 | | | | 49,9 |

Tabelle 15a (fortgesetzt)

| t₅₀-Werte der Einzelverbindungen sowie deren Kombinationen | | | | |
|---|---|---|---|---|
| Fe-TR (ppm) | DCD (ppm) | ATS (ppm) | Mischungsverhältnis Fe-Tr : DCD : ATS | $t_{50}$-Werte (Tage) |
| | 0,5 | | | 4,8 |
| | 1,0 | | | 9,3 |
| | 2,5 | | | 15,4 |
| | 5,0 | | | 22,6 |
| | 7,5 | | | 27,3 |
| | 10,0 | | | 32,8 |
| | | 2,0 | | 0,09 |
| | | 4,0 | | 0,09 |
| | | 6,0 | | 0,1 |
| | | 8,0 | | 0,1 |
| | | 10,0 | | 0,1 |
| 2,0 | 2,0 | 2,0 | 33,3 : 33,3 : 33,3 | 54,6 |
| 1,0 | 1,0 | 1,0 | | 45,8 |
| 0,231 | 4,615 | 1,154 | 3,8 : 77 : 19,2 | 51,2 |
| 0,115 | 2,308 | 0,577 | | 35,8 |
| 0,231 | 2,885 | 2,885 | 3,8 : 48,1 : 48,1 | 44,9 |
| 0,115 | 1,422 | 1,422 | | 28,8 |
| 0,231 | 1,154 | 4,615 | 3,8 : 19,2 : 77 | 29,5 |
| 0,115 | 0,577 | 2,308 | | 16,7 |
| 0,545 | 4,364 | 1,091 | 9,1 : 72,7 : 18,2 | 57,9 |
| 0,273 | 2,182 | 0,545 | | 39,7 |

Tabelle 15b

| Prozentuale Wirkstoffeinsparung bzw. Wirkungsverbesserung berechnet nach dem Unabhängigkeitsmodell (UAM) | | | | | |
|---|---|---|---|---|---|
| Mischungsverhältnis Fe-Tr:DCD:ATS | Konzentration der Kombination (ppm) | Wirkung im Versuch | Wirkung nach UAM | Wirkungsverbesserung | Dosiseinsparung (%) |
| 33,3:33,3:33,3 | 6,0 | 82 | 66 | 16 | 58 |
| | 3,0 | 68 | 52 | 16 | 55 |
| 3,8:77:19,2 | 6,0 | 77 | 46 | 29 | 76 |
| | 3,0 | 53 | 32 | 21 | 63 |
| 3,8:48,1:48,1 | 6,0 | 67 | 40 | 27 | 69 |
| | 3,0 | 43 | 27 | 16 | 56 |

Tabelle 15b (fortgesetzt)

| Prozentuale Wirkstoffeinsparung bzw. Wirkungsverbesserung berechnet nach dem Unabhängigkeitsmodell (UAM) | | | | | |
|---|---|---|---|---|---|
| Mischungsverhältnis Fe-Tr:DCD:ATS | Konzentration der Kombination (ppm) | Wirkung im Versuch | Wirkung nach UAM | Wirkungsverbesserung | Dosiseinsparung (%) |
| 3,8:19,2:77 | 6,0 | 44 | 32 | 12 | 44 |
| | 3,0 | 25 | 21 | 4 | 26 |
| 9,1:72,7:18,2 | 6,0 | 87 | 55 | 32 | 81 |
| | 3,0 | 60 | 39 | 21 | 60 |

**Beispiel 14: Kombination Mangan-triazol-komplex/1-Guanyl-3-methylpyrazol-Magnesium-Komplex/DCD**

Testmethodik und EDV-gestützte Auswertung analog Beispiel 1

Tabelle 16a

| $t_{50}$-Werte der Einzelverbindungen sowie deren Kombinationen | | | | |
|---|---|---|---|---|
| MT (ppm) | GM (ppm) | DCD (ppm) | Mischungsverhältnis MT : GM : DCD | $t_{50}$-Werte (Tage) |
| 0,2 | | | | 5,6 |
| 0,5 | | | | 15,5 |
| 1,0 | | | | 28,4 |
| 1,5 | | | | 35,4 |
| 2,0 | | | | 42,1 |
| 3,0 | | | | 49,7 |
| | 0,2 | | | 8,5 |
| | 0,6 | | | 25,6 |
| | 1,0 | | | 42,9 |
| | 1,5 | | | 46,8 |
| | 2,0 | | | 48,4 |
| | | 2,0 | | 20,7 |
| | | 4,0 | | 25,9 |
| | | 8,0 | | 31,5 |
| | | 10,0 | | 35,4 |
| | | 16,0 | | 52,5 |
| 1,667 | 1,667 | 1,667 | 33,3 : 33,3 : 33,3 | 106,9 |
| 1,0 | 1,0 | 1,0 | | 85,7 |
| 0,667 | 0,667 | 0,667 | | 61,8 |
| 0,417 | 0,417 | 4,166 | 8,3 : 8,3 : 83,4 | 64,1 |
| 0,25 | 0,25 | 2,5 | | 44,8 |
| 0,167 | 0,167 | 1,666 | | 34,1 |

Tabelle 16a (fortgesetzt)

| t_{50}-Werte der Einzelverbindungen sowie deren Kombinationen | | | | |
|---|---|---|---|---|
| MT (ppm) | GM (ppm) | DCD (ppm) | Mischungsverhältnis MT : GM : DCD | t_{50}-Werte (Tage) |
| 0,185 | 0,185 | 4,630 | 3,7 : 3,7 : 92,6 | 60,7 |
| 0,111 | 0,111 | 2,778 | | 40,1 |
| 0,543 | 0,109 | 4,348 | 10,9 : 2,1 : 87 | 54,6 |
| 0,109 | 0,543 | 4,348 | 2,1 : 10,9 : 87 | 61,4 |

Tabelle 16b

| Prozentuale Wirkstoffeinsparung bzw. Wirkungsverbesserung berechnet nach dem Unabhängigkeitsmodell (UAM) | | | | | |
|---|---|---|---|---|---|
| Mischungsverhältnis MT:GM:DCD | Konzentration der Kombination (ppm) | Wirkung im Ver- such | Wirkung nach UAM | Wirkungsverbes- serung | Dosiseinspa- rung (%) |
| 33,3:33,3:33,3 | 5,0 | 100 | 89 | 11 | 84 |
| | 3,0 | 100 | 76 | 24 | 91 |
| | 2,0 | 93 | 62 | 31 | 68 |
| 8,3:8,3:83,4 | 5,0 | 96 | 64 | 32 | 73 |
| | 3,0 | 67 | 45 | 22 | 44 |
| | 2,0 | 51 | 31 | 20 | 44 |
| 3,7:3,7:92,6 | 5,0 | 91 | 54 | 37 | 73 |
| | 3,0 | 60 | 37 | 23 | 50 |
| 10,9:2,1:87 | 5,0 | 82 | 59 | 23 | 52 |
| 2,1:10,9:87 | 5,0 | 92 | 63 | 29 | 67 |

**Beispiel 15: Kombination 1H-1,2,4-Triazol/MP/GTH**

Testmethodik und EDV-gestützte Auswertung analog Beispiel 1

Tabelle 17a

| t_{50}-Werte der Einzelverbindungen sowie deren Kombinationen | | | | |
|---|---|---|---|---|
| Tr (ppm) | MP (ppm) | GTH (ppm) | Mischungsverhältnis Tr : MP : GTH | t_{50}-Werte (Tage) |
| 0,1 | | | | 5,8 |
| 0,25 | | | | 14,3 |
| 0,5 | | | | 29,0 |
| 0,75 | | | | 42,1 |
| 1,0 | | | | 49,1 |

Tabelle 17a (fortgesetzt)

| $t_{50}$-Werte der Einzelverbindungen sowie deren Kombinationen | | | | |
|---|---|---|---|---|
| Tr (ppm) | MP (ppm) | GTH (ppm) | Mischungsverhältnis Tr : MP : GTH | $t_{50}$-Werte (Tage) |
| 1,5 | | | | 51,9 |
| 3,0 | | | | 56,2 |
| | 0,1 | | | 9,1 |
| | 0,25 | | | 24,5 |
| | 0,5 | | | 43,6 |
| | 0,656 | | | 46,3 |
| | 1,0 | | | 48,7 |
| | 2,0 | | | 52,3 |
| | | 2,0 | | 1,0 |
| | | 4,0 | | 9,3 |
| | | 6,0 | | 18,4 |
| | | 8,0 | | 28,0 |
| | | 10,0 | | 37,4 |
| | | 12,0 | | 47,2 |
| 1,667 | 1,667 | 1,667 | 33,3 : 33,3 : 33,3 | 112,1 |
| 1,0 | 1,0 | 1,0 | | 105,7 |
| 0,227 | 0,227 | 4,546 | 4,5 : 4,5 : 91 | 73,4 |
| 0,136 | 0,136 | 2,727 | | 47,8 |
| 0,119 | 0,119 | 4,762 | 2,4 : 2,4 : 95,2 | 44,9 |
| 0,071 | 0,071 | 2,857 | | 29,3 |

Tabelle 17b

| Prozentuale Wirkstoffeinsparung bzw. Wirkungsverbesserung berechnet nach dem Unabhängigkeitsmodell (UAM) | | | | | |
|---|---|---|---|---|---|
| Mischungsverhältnis Tr:MP:GTH | Konzentration der Kombination (ppm) | Wirkung im Versuch | Wirkung nach UAM | Wirkungsverbesserung | Dosiseinsparung (%) |
| 33,3:33,3:33,3 | 5,0 | 100 | 98 | 2 | 65 |
| | 3,0 | 100 | 92 | 8 | 69 |
| 4,5:4,5:91 | 5,0 | 100 | 56 | 44 | 91 |
| | 3,0 | 72 | 35 | 37 | 59 |
| 2,4:2,4:95,2 | 5,0 | 67 | 40 | 27 | 48 |
| | 3,0 | 44 | 23 | 21 | 46 |

**Beispiel 16: Kombination 1H-1,2,4-Triazol/MP/DCD**

Testmethodik und EDV-gestützte Auswertung analog Beispiel 1

Tabelle 18a

| $t_{50}$-Werte der Einzelverbindungen sowie deren Kombinationen | | | | |
|---|---|---|---|---|
| Tr (ppm) | MP (ppm) | DCD (ppm) | Mischungsverhältnis Tr : MP : DCD | $t_{50}$-Werte (Tage) |
| 0,1 | | | | 5,2 |
| 0,25 | | | | 13,4 |
| 0,5 | | | | 28,1 |
| 0,75 | | | | 40,7 |
| 1,0 | | | | 46,9 |
| 1,5 | | | | 49,8 |
| 3,0 | | | | 52,1 |
| | 0,1 | | | 7,6 |
| | 0,25 | | | 19,4 |
| | 0,5 | | | 35,7 |
| | 0,656 | | | 40,1 |
| | 1,0 | | | 46,1 |
| | 2,0 | | | 49,7 |
| | | 0,5 | | 4,1 |
| | | 1,0 | | 9,1 |
| | | 2,5 | | 14,2 |
| | | 5,0 | | 22,3 |
| | | 10,0 | | 30,7 |
| | | 13,0 | | 41,8 |
| 1,667 | 1,667 | 1,667 | 33,3 : 33,3 : 33,3 | 112,9 |
| 1,0 | 1,0 | 1,0 | | 102,3 |
| 0,227 | 0,227 | 4,546 | 4,5 : 4,5 : 91 | 79,4 |
| 0,136 | 0,136 | 2,727 | | 52,9 |
| 0,119 | 0,119 | 4,762 | 2,4 : 2,4 : 95,2 | 57,1 |
| 0,071 | 0,071 | 2,857 | | 41,8 |

Tabelle 18b

| Prozentuale Wirkstoffeinsparung bzw. Wirkungsverbesserung berechnet nach dem Unabhängigkeitsmodell (UAM) | | | | | |
|---|---|---|---|---|---|
| Mischungsverhältnis Tr:MP:DCD | Konzentration der Kombination (ppm) | Wirkung im Ver-such | Wirkung nach UAM | Wirkungsverbes-serung | Dosiseinspa-rung (%) |
| 33,3:33,3:33,3 | 5,0 | 100 | 95 | 5 | 82 |
| | 3,0 | 100 | 88 | 12 | 89 |
| 4,5:4,5:91 | 5,0 | 100 | 64 | 36 | 94 |
| | 3,0 | 79 | 47 | 32 | 63 |
| 2,4:2,4:95,2 | 5,0 | 86 | 54 | 32 | 66 |
| | 3,0 | 63 | 38 | 25 | 54 |

**Patentansprüche**

1. Verwendung einer Wirkstoffkombination, bestehend aus 1H-1,2,4-Triazol oder einem substituierten 1H-1,2,4-Triazol bzw. dessen Salzen oder Metallkomplexen und mindestens einer weiteren Verbindung, ausgewählt aus der Gruppe der substituierten Pyrazole, deren Salze oder Metallkomplexe, Dicyandiamid, Guanylthioharnstoff, Thioharnstoff, Ammoniumrbodanid, Ammoniumthiosulfat, wobei das Mischungsverhältnis der resultierenden Zweierkombinationen zwischen 0,5 : 99,5 und 99,5 : 0,5 liegt und im Falle von Kombinationen mit mehr als zwei Wirkstoffkomponenten beliebig sein kann, zur Hemmung bzw. Regelung der Nitrifikation von Ammoniumstickstoff in Kulturböden und Substraten.

**Claims**

1. Use of an active substance combination composed of 1H-1,2,4-triazole or a substituted 1H-1,2,4-triazole, or salts or metal complexes thereof, and at least one other compound selected from the group of the substituted pyrazoles, the salts or metal complexes thereof, dicyandiamide, guanylthiourea, thiourea, ammonium thiocyanate and ammonium thiosulphate, where the mixing ratio of the resulting two-compound combinations is between 0.5:99.5 and 99.5:0.5 and can be as desired if more than two active compound components enter the combinations, for inhibiting or regulating the nitrification of ammonium nitrogen in cultivated soils and in substrates.

**Revendications**

1. Utilisation d'une combinaison de substances actives, constituée de 1H-1,2,4-triazole ou d'un 1H-1,2,4-triazole substitué ou de ses sels ou complexes métalliques, et d'au moins un composé supplémentaire choisi parmi le groupe constitué des pyrazoles substitués, de leurs sels ou complexes métalliques, du dicyanodiamide, de la guanylthio-urée, de la thio-urée, du thiocyanate d'ammonium, du thiosulfate d'ammonium, le rapport molaire des combinaisons binaires résultantes étant compris entre 0,5:99,5 et 99,5:0,5 et pouvant être quelconque dans le cas de combinaisons comprenant plusieurs composants actifs, en vue de l'inhibition ou de la régulation de la nitrification de l'azote d'ammonium dans des sols cultivés et des substrats.